# EUROPÄISCHE PATENTSCHRIFT

(11) **EP 1 016 295 B1**
(45) Veröffentlichungstag und Bekanntmachung des Hinweises auf die Patenterteilung: **04.07.2007**
(21) Anmeldenummer: 98949890.2
(22) Anmeldetag: 14.08.1998
(51) Int. Cl.: H04Q 7/32, H04Q 7/22

(54) **VERFAHREN UND VORRICHTUNG ZUR FERNKONFIGURATION DER EINSTELLUNGEN EINES KOMMUNIKATIONSENDGERÄTES**
METHOD AND DEVICE FOR REMOTE CONFIGURATION OF THE SETTINGS OF A COMMUNICATION TERMINAL
PROCEDE ET DISPOSITIF POUR CONFIGURER A DISTANCE UN TERMINAL DE COMMUNICATION

(30) Priorität: 15.09.1997 DE 19740574
(43) Veröffentlichungstag der Anmeldung: 05.07.2000
(73) Patentinhaber: SIEMENS AKTIENGESELLSCHAFT, 80333 München (DE)
(72) Erfinder: WEGHORST, Ingo, D-81675 München (DE); GÜNTZER, Peter, D-82194 Gröbenzell (DE)
(86) Internationale Anmeldenummer: PCT/DE1998/002358
(87) Internationale Veröffentlichungsnummer: WO 1999/014965

(56) Entgegenhaltungen:
- EP-A- 0 562 890
- WO-A-97/29606
- DE-A- 19 543 843
- US-A- 5 276 729

## Beschreibung

Die Erfindung betrifft ein Verfahren zur Konfiguration der Einstellungen an einem Mobiltelefon per remote access, beispielsweise durch einen speziellen Dienstanbieter, und eine Vorrichtung zur Durchführung des Verfahrens.

Mobiltelefone verfügen heute über eine große Anzahl von Einstellmöglichkeiten, mit denen der Benutzer das Gerät und seine Funktionen seinen Bedürfnissen anpassen kann. Diese gliedern sich im Wesentlichen in drei Bereiche.

Zum Ersten gibt es die mobiltelefoneigenen Einstellungen. Dazu gehören beispielsweise die Art und die Lautstärke des Klingelns, DTMF Wahlverfahren, verschiedenartige Sperren, Benutzungseinstellungen für Short Message Service (SMS), Anzeigen der Telefonierzeit in Einheiten oder in Geldbeträgen. Der zweite Bereich umfaßt Netzwerk-Einstellungen und Einstellungen auf der SIM Karte, wie Rufumleitung und Aktivierung der Mailbox.
Im dritten Bereich sind Einstellungen an Netzwerk-Zusatzdiensten enthalten, zum Beispiel das Ändern des Mailbox Begrüßungstextes

Aus EP 0 562 890, "Mobile communication network with remote updating of subscriber identity modules in mobile terminals" ist bereits ein Verfahren bekannt, welches es ermöglicht, die Einstellungen der SIM Karte zu modifizieren, ohne diese aus dem Endgerät zu entfernen. Die in der SIM Karte gespeicherten, teilnehmerspozifischen Angaben sind dabei geräteunabhängig und die SIM Karte kann in verschiedenen Endgeräten betrieben werden, da die Schnittstellen standardisiert sind.

In US 5,276,729 wird ein Verfahren zur Fernsteuerung eines Mobiltelefons beschrieben. Dem Mobiltelefon können Telefonnummern per DTMF übermittelt werden, und es kann ein von diesem Mobiltelefon ausgehender Verbindungsaufbau ferngesteuert initiiert worden. Um einen Mißbrauch dieses Features zu vermeiden, werden verschiedene Sicherungsmechanismen angegeben.

Die Druckschrift DE 195 43 843 A1 beschreibt ein Verfahren zur Aktualisierung der Software in einem mikrocomputergestützten Telefon. Über ein Telekommunikationsnetzwerk können komplette Software-Module in dem Telefon durch eine neue Version des Moduls ersetzt werden.

In WO 97/29606 wird ebenfalls ein Verfahren beschrieben, welches überprüft, ob ein spezielles, benötigtes Programm ("Codec", ein Sprach-Codierungs-Algorithmus) auf dem Endgerät vorhanden ist. Wenn dies nicht der Fall ist, so wird das Programm beim Verbindungsaufbau über das Mobilfunknetz an das Endgerät übertragen.

In den weiteren Ausführungen betrachten wir nur noch den ersten Bereich der mobiltelefoneigenen Einstellungen. Bei Erwerb eines Telefons sind diese in der Regel voreingestellt und der Benutzer ändert nur die Werte, die für ihn von Belang sind. Viele dieser Einstellungen nimmt man an dem Mobiltelefon einmal bei Inbetriebnahme vor oder überhaupt nicht, weil man die Funktion nicht benutzen möchte oder keinen Vorteil darin erkennt.

Die Einstellung der Werte geschieht in der Regel mit Hilfe eines Displays und einer Eingabeeinrichtung, dem Wahltastenfeld. Hierbei wird die Einstellung meist menue-gesteuert durchgeführt, bei einer Vielzahl von möglichen Einstellungen wird die Anzahl der Untermenues schnell groß und damit unübersichtlich.

Daher sind viele Einstellungen durch den Benutzer des Mobiltelefons nur mit Hilfe der Bedienungsanleitung durchzuführen. Wegen der ständig wachsenden Funktionalitäten von Mobiltelefonen werden die Menues immer komplexer. Manche Einstellungen sind nur einsehbar und nachvollziehbar, wenn der Benutzer größeres Fachwissen im Bereich Mobilfunk besitzt.

Aufgabe der Erfindung ist es, dem Besitzer eines Mobiltelefons eine einfache und komfortable Möglichkeit anzubieten, die Funktionen dieses Gerätes so einzustellen, daß es seinen Bedürfnissen optimal angepaßt ist. Zudem soll ihm schnelle und professionelle Unterstützung bei der Erkennung und Behebung von Bedienungsfehlern gegeben werden können.

Diese Aufgabe wird durch ein Verfahren gemäß Anspruch 1 gelöst, bei dem die an einem Mobiltelefon zur Konfigurierung notwendigen Einstellungen nicht direkt am Gerät vorgenommen werden müssen, sondern eine Schnittstelle angeboten wird, über die eine Einstellung der selben Parameter auch ferngesteuert über die in einem Mobiltelefon vorhandene Funkschnittstelle geschehen kann.

Dabei können die Einstellungen von Service Zentralen und Hotlines der Hersteller oder Netzbetreiber vorgenommen werden.

Vorteilhafte Ausgestaltungen und Weiterbildungen sind in den Unteransprüchen angegeben.

Im folgenden wird die Erfindung mit Hilfe von Figuren und anhand von Ausführungsbeispielen erläutert.

Dabei zeigt
Figur 1 einen beispielhaften Aufbau einer Vorrichtung nach Anspruch 14,
Figur 2 den beispielhaften Ablauf eines Service Anrufes von einem Teilnehmer (TN) an ein Service Center (SC).

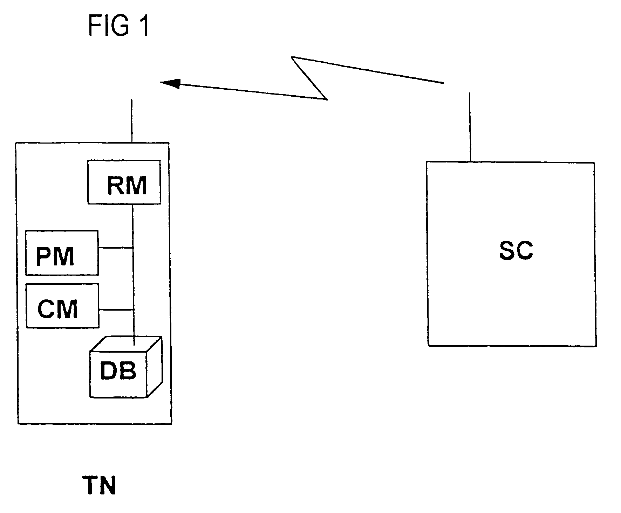

In Figur 1 ist ein Endgerät eines Teilnehmers (TN) dargestellt, welches über Fernkonfiguration vom Service Center programmiert werden kann. Dabei sind die momentan eingestellten Konfigurationsdaten im Endgerät gespeichert (DB), die neuen Konfigurationsdaten werden mittels eines Empfangsteils (RM) empfangen und im Endgerät verarbeitet (PM). Zuletzt werden die aktuell eingestellten Konfigurationsdaten geändert (CM).

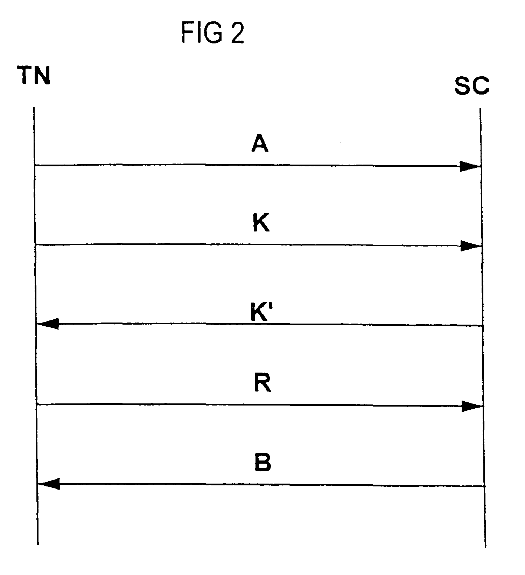

Wie in dem in Figur 2 aufgezeigten Ablaufdiagramm könnte ein Serviceanruf eines Teilnehmers (TN) bei einem Service Center (SC) aussehen. Der Teilnehmer TN stellt ein 'Fehlverhalten' seines Mobiltelefones fest und fragt beim Service Center um Hilfe nach (Anruf A). Damit das Service Center die korrekte Diagnose stellen kann, bittet es um Sendung der aktuell eingestellten Konfigurationsdaten (K), beispielsweise im SMS Format. Sobald die Ursache gefunden ist, überträgt das Service Center die neuen Konfigurationsdaten (K') zum Endgerät des Teilnehmers.
Um einen Mißbrauch der Fernkonfiguration zu verhindern, kann das Endgerät des Teilnehmers TN beispielsweise einen Rückruf R initiieren, der wiederum eine Bestätigung B des Service Center zur Folge hat, worauf hin erst die Konfigurationsdaten des Endgerätes geändert werden.

Die im Mobiltelefon bereits enthaltene Funkschnittstelle bietet sich für den Empfang von Konfigurierungsnachrichten an. Dabei kann man ein spezielles Nachrichtenformat für die Konfigurierung festlegen, oder auf bereits bekannte Formate wie Short Message Service (SMS) oder USSD zurückgreifen.

In einer weiteren, für den Kunden und Mobiltelefonbenutzer komfortablen Ausführungsform ist es für den Mitarbeiter an der Hotline günstiger, wenn er nicht die Einstellung des Mobiltelefons mühsam mit dem Benutzer des Gerätes herausfinden muß sondern sich den aktuell am Gerät eingestellten Zustand abrufen kann. Dies geschieht über dieselbe Funkschnittstelle, über die hinterher die korrigierten Konfigurationsdaten an das Gerät geschickt werden. Oder der Benutzer des Endgerätes wird gebeten, mittels eines speziellen Befehls sein Endgerät dazu zu veranlassen, die aktuell eingestellten Konfigurationsdaten an eine fest eingestellte oder vorher einzugebende Service Nummer zu übermitteln.

Sofern die SMS oder USSD Schnittstelle verwendet wird, müssen die Konfigurationsdaten als solche gekennzeichnet sein. Dabei kann man auf verschiedene Arten vorgehen.
- Wenn das Gerät von einem bestimmten, immer gleichen Service Zentrum betreut wird, kann dieses als Absenderidentifikation in der Konfigurierungsnachricht seine Rufnummer mit übergeben. Diese ist dann z. B. auf der SIM-Karte oder einem festen Platz im Telefonbuch gespeichert oder wird vom Mobiltelefon durch einen Rückruf überprüft.
- Die Nachricht kann eine Escape-Sequenz an einer definierten Stelle (z. B. am Anfang) enthalten, die sie als Konfigurationsnachricht ausweist.
- Die Nachricht enthält eine Prüfsumme (z. B. CRC), damit zusätzlich sichergestellt ist, daß die Konfigurationsdaten auch korrekt übertragen und empfangen worden sind.
- Wenn das Mobiltelefon bzw. die SIM Karte ein 'Multi-Numbering' unterstützt, d. h. wenn es verschiedene Rufnummern hat, kann eine dieser Rufnummern exklusiv für die Fernkonfigurierung reserviert werden. Damit ist ebenfalls eine saubere Trennung von Nutzdaten und Konfigurationsdaten gewährleistet.

Eine Möglichkeit, die unerwünschte Veränderung von Konfigurationsdaten zu verhindern, ist die explizite Freigabe der Konfigurierung durch den Benutzer. Dafür erhält dieser auf seinem Display einen Hinweis, sobald das Gerät eine entsprechende Nachricht erhalten hat (beispielsweise 'eingegangene Nachricht zur Fernkonfigurierung nutzen?' oder noch ausführlicher 'Der SMS Versender mit der Rufnummer ... möchte in Ihrem Gerät das Menue '...' neu konfigurieren. Zulassen?'). Erst wenn der Benutzer diese Nachricht positiv bestätigt, wird die Fernkonfigurierung durchgeführt.

Um den unzulässigen Zugriff auf die Konfigurationsdaten zu verhindern kann man auch ein Paßwort einrichten, etwa in Form einer PIN Nummer oder der IMEI Nummer, die für das Gerät charakteristisch aber nicht allgemein bekannt ist.

In einer weiteren Ausführungsform kann man bereits im Mobiltelefon Filter eingeben, wobei unter bestimmten Umständen das Gerät automatisch eine Diagnose-Nachricht an das Service Center versendet und gegebenenfalls eine Umkonfigurierung anfordert.

Nach der GSM Spezifikation ist eine Sicherung von Konfigurationsnachrichten (insbesondere im SMS Format) auf der SIM (Subscriber Identity Module) Karte möglich. Mittels eines Kommando-Schlüssels kann die SIM Karte daraufhin vordefinierte Kommandos (bereits in GSM spezifiziert) wie 'Starten eines Calls' ausführen.

### Abkürzungsverzeichnis

- CRC: Cyclic Redundancy Check
- DTMF: Dial Tone Multi Frequency
- GSM: Global System for Mobile Communication
- IMEI: International Mobile Equipment Identity
- PIN: Personal Identification Number
- SIM: Subscriber Identity Module
- SMS: Short Message Service
- USSD: Unstructured Supplementary Service Data

### Bezugszeichenliste

- A: Anruf
- B: Bestätigung
- CM: Mittel zum Ändern (Change Means)
- DB: Konfigurationsdaten im Endgerät eingestellt
- K: Nachricht, die Konfigurationsdaten enthält
- K': Nachricht, die geänderte Konfigurationsdaten enthält
- PM: Mittel zum Verarbeiten (Processing Means)
- R: Rückruf
- RM: Mittel zum Empfangen (Receive Means)
- SC: Service Center
- TN: Teilnehmer

## Patentansprüche

1. Verfahren zur Konfigurierung von Einstellungen eines Mobiltelefons (TN), das aus einer Mobilstation und einer Teilnehmeridentifikationskarte (SIM) besteht,
wobei die Konfigurationseinstellungen in der Mobilstation gespeichert sind (DB),
**dadurch gekennzeichnet, dass**
- in der Mobilstation eingestellte Konfigurationsdaten in einer geeigneten ersten Nachricht (K) über die Funkschnittstelle des Mobiltelefones an eine Konfigurationszentrale (SC) gesendet werden, und
- die Konfigurationsdaten von der Konfigurationszentrale überprüft werden, und
- die von der Konfigurationszentrale geänderten Konfigurationsdaten in einer zweiten Nachricht (K') über die Funkschnittstelle (RM) von dem Mobiltelefon empfangen ' und verarbeitet (PM) werden.

2. Verfahren nach Patentanspruch 1,
**dadurch gekennzeichnet, dass**
die in der Mobilstation eingestellten Konfigurationswerte abgefragt werden, und auf die Anfrage der Konfigurationszentrale (SC) eine geeignete Nachricht (K) über die Funkschnittstelle des Kommunikationsendgerätes gesendet wird, welche die in der Mobilstation eingestellte Konfigurationsdaten enthält.

3. Verfahren nach einem der vorigen Ansprüche, bei dem die Nachricht (K), die die Konfigurationsdaten enthält, zusätzlich einen Absender enthält, durch den sie eindeutig indentifizierbar ist.

4. Verfahren nach einem der vorigen Ansprüche, bei dem die Nachricht (K), die die Konfigurierungsdaten enthält, nach einer festgelegten Form aufgebaut ist und an einer festgelegten Stelle eine Zeichenfolge enthält, die sie identifiziert.

5. Verfahren nach einem der vorigen Ansprüche, bei dem die Einstellung der Konfigurationsdaten durch Fernzugriff nur durchgeführt werden kann, wenn der Benutzer des Kommunikationsendgerätes (TN) die Fernkonfiguration freigegeben hat.

6. Verfahren nach einem der vorigen Ansprüche, bei dem die Einstellung der Konfigurationsdaten durch Fernkonfiguration mit einem Paßwort geschützt ist.

7. Verfahren nach einem der vorigen Ansprüche, bei dem die Identität des Absenders der Fernkonfiguration durch einen automatischen Rückruf (R) des Mobiltelefons geprüft wird, und die Änderung der Konfigurationsdaten erst nach Empfang einer Bestätigung (B) ausgeführt wird.

8. Verfahren nach einem der vorigen Ansprüche, bei dem die Nachricht (K'), neben den Konfigurationsdaten auch eine Prüfsumme enthält.

9. Verfahren nach einem der vorigen Ansprüche, bei dem nach erfolgter Fernkonfigurierung vom Kommunikationsendgerät eine Nachricht generiert und an die konfigurierende Stelle gesendet wird, um die korrekte Durchführung der Konfigurierung zu überprüfen.

10. Verfahren nach einem der vorigen Ansprüche, bei dem das Mobiltelefon selber eine Diagnose durchführt und unter bestimmten einstellbaren Bedingungen eine Fernkonfiguration anfordert.

11. Verfahren nach einem der vorigen Ansprüche, bei dem die Übertragung der Nachricht (K), (K'), die die Konfigurationsdaten enthält, mittels Short Message Service (SMS) geschieht.

12. Verfahren nach einem der vorigen Ansprüche, bei dem die Übertragung der Nachricht (K), (K'), die die Konfigurationsdaten enthält, mittels einer Unstructured Supplementary Services Data (USSD) Message geschieht.

13. Verfahren nach einem der vorigen Ansprüche 1 bis 11, bei dem die SMS Nachricht (K') mit Hilfe der Subscriber Identity Module (SIM) Karte gesichert ist und die SIM Karte dann bereits vorher spezifizierte Kommandos erteilt um Aktionen im Mobiltelefon einzuleiten.

14. Vorrichtung zur Durchführung einer Fernkonfigurierung von Einstellungen eines Mobiltelefons (TN), das eine Teilnehmeridentifikationskarte (SIM) enthält, mit:
a) Mitteln zum Speichern (DB) von Konfigurationseinstellungen,
b) Mitteln zum Senden (RM) einer, Konfigurationseinstellungen enthaltenden, ersten Nachricht (K),
c) Mitteln zum Empfangen (RM) einer, neue Konfigurationseinstellungen enthaltenden, zweiten Nachricht (K') von einer Konfigurationszentrale (SC),
d) Mitteln zum Verarbeiten (PM) dieser zweiten Nachricht (K') und
e) Mitteln zum Verändern (CM) der Konfigurationsdaten in dem Mobiltelefon.

15. Vorrichtung nach Patentanspruch 14,
**dadurch gekennzeichnet, dass**
eine Konfigurationsnachricht in der SIM Karte gesichert ist und mittels eines auf der SIM Karte gespeicherten Schlüssels vorher spezifizierte Kommandos erteilt um in der Mobilstation (TN) Aktionen auszulösen.

## Claims

1. Method for configuring settings of a mobile telephone (TN) consisting of a mobile station and a subscriber identification module (SIM) card, wherein the configuration settings are stored in the mobile station (DB),
**characterised in that**
- configuration data that is set in the mobile station is sent in a suitable first message (K) via the radio interface of the mobile telephone to a configuration centre (SC), and
- the configuration data is checked by the configuration centre, and
- the configuration data modified by the configuration centre is received by the mobile telephone in a second message (K') via the radio interface (RM) and processed.

2. Method according to claim 1,
**characterised in that**
the configuration values set in the mobile station are interrogated and in response to the request by the configuration centre (SC) a suitable message (K) is sent via the radio interface of the communication terminal device, said message containing the configuration data set in the mobile station.

3. Method according to one of the preceding claims, wherein the message (K) containing the configuration data additionally includes a sender by means of which it can be uniquely identified.

4. Method according to one of the preceding claims, wherein the message (K) containing the configuration data is structured in accordance with a defined format and includes, at a defined position, a character string which identifies it.

5. Method according to one of the preceding claims, wherein the configuration data can be set by remote access only if the user of the communication terminal (TN) has enabled the remote configuration function.

6. Method according to one of the preceding claims, wherein the setting of the configuration data by remote configuration is protected by means of a password.

7. Method according to one of the preceding claims, wherein the identity of the sender of the remote configuration is checked by means of an automatic callback (R) of the mobile telephone and the configuration data is updated only after receipt of an acknowledgment (B).

8. Method according to one of the preceding claims, wherein the message (K') also includes a checksum in addition to the configuration data.

9. Method according to one of the preceding claims, wherein on completion of the remote configuration a message is generated by the communication terminal and sent to the configuring station in order to verify the correct execution of the configuration.

10. Method according to one of the preceding claims, wherein the mobile telephone itself performs a diagnosis and requests a remote configuration subject to specific settable conditions.

11. Method according to one of the preceding claims, wherein the message (K), (K') containing the configuration data is transmitted using the Short Message Service (SMS).

12. Method according to one of the preceding claims, wherein the message (K), (K') containing the configuration data is transmitted using an Unstructured Supplementary Services Data (USSD) message.

13. Method according to one of the preceding claims 1 to 11, wherein the SMS message (K') is saved with the aid of the Subscriber Identity Module (SIM) card and the SIM card then issues commands already specified previously in order to initiate actions in the mobile telephone.

14. Device for performing a remote configuration of settings of a mobile telephone (TN) containing a subscriber identification module (SIM) card, comprising:
a) means for storing (DB) configuration settings
b) means for sending a first message (K) containing configuration settings
c) means for receiving (RM) a second message (K') containing new configuration settings from a configuration centre (SC),
d) means for processing (PM) said second message (K') and
e) means for changing (CM) the configuration data in the mobile telephone.

15. Device according to claim 14,
**characterised in that**
a configuration message is saved in the SIM card and prespecified commands are issued by means of a key stored on the SIM card in order to initiate actions in the mobile station (TN).

## Revendications

1. Procédé de configuration de réglages d'un téléphone mobile (TN) qui se compose d'une station mobile et d'une carte d'identification d'abonné (SIM), les réglages de configuration étant stockés (DB) dans la station mobile, **caractérisé en ce que** des données de configuration réglées dans la station mobile sont envoyées dans un premier message approprié (K) via l'interface radio du téléphone mobile à un centre de configuration (SC) et les données de configuration sont vérifiées par le centre de configuration et les données de configuration modifiées par le centre de configuration sont reçues dans un deuxième message (K') via l'interface radio (RM) et traitées (PM) par le téléphone mobile.

2. Procédé selon la revendication 1, **caractérisé en ce que** les valeurs de configuration réglées dans la station mobile sont interrogées et un message approprié (K) est émis via l'interface radio du terminal de communication à la demande du centre de configuration (SC), lequel message contient les données de configuration réglées dans la station mobile.

3. Procédé selon l'une des revendications précédentes, dans lequel le message (K) qui contient les données de configuration contient additionnellement un émetteur par lequel il est identifiable univoquement.

4. Procédé selon l'une des revendications précédentes, dans lequel le message (K) qui contient les données de configuration est structuré selon une forme déterminée et contient, à une position déterminée, une suite de signes qui l'identifie.

5. Procédé selon l'une des revendications précédentes, dans lequel le réglage des données de configuration peut être effectué par accès à distance si l'utilisateur a autorisé la téléconfiguration du terminal de communication (TN).

6. Procédé selon l'une des revendications précédentes, dans lequel le réglage des données de configuration par téléconfiguration est protégé par un mot de passe.

7. Procédé selon l'une des revendications précédentes, dans lequel l'identité de l'émetteur de la téléconfiguration est contrôlée par un rappel automatique (R) du téléphone mobile et la modification des données de configuration n'est exécutée qu'après la réception d'une confirmation (B).

8. Procédé selon l'une des revendications précédentes, dans lequel le message (K'), outre les données de configuration, contient également une somme de contrôle.

9. Procédé selon l'une des revendications précédentes, dans lequel, après que la téléconfiguration a eu lieu, le terminal de communication génère un message et l'envoie au service de configuration pour vérifier l'exécution correcte de la configuration.

10. Procédé selon l'une des revendications précédentes, dans lequel le téléphone mobile effectue lui-même un diagnostic et, dans certaines conditions réglables, demande une téléconfiguration.

11. Procédé selon l'une des revendications précédentes, dans lequel la transmission du message (K), (K') qui contient les données de configuration se fait au moyen du service de messages courts (Short Message Service, SMS).

12. Procédé selon l'une des revendications précédentes, dans lequel la transmission du message (K), (K') qui contient les données de configuration se fait au moyen d'un message «Unstructured Supplementary Services Data» (USSD).

13. Procédé selon l'une des revendications précédentes 1 à 11, dans lequel le message SMS (K') est sécurisé à l'aide de la carte «Subscriber Identity Module» (SIM) et la carte SIM donne alors des ordres déjà spécifiés préalablement pour initialiser des actions dans le téléphone mobile.

14. Dispositif pour exécuter une téléconfiguration des réglages d'un téléphone mobile (TN) qui contient une carte d'identification d'abonné (SIM), avec
a) des moyens de stockage (DB) de réglages de configuration,
b) des moyens pour émettre (RM) un premier message (K) contenant des réglages de configuration,
c) des moyens pour recevoir (RM) d'un centre de configuration (SC) un deuxième message (K') contenant de nouveaux réglages de configuration,
d) des moyens pour traiter (PM) ce deuxième message (K') et
e) des moyens pour modifier (CM) les données de configuration dans le téléphone mobile.

15. Dispositif selon la revendication 14, **caractérisé en ce qu'**un message de configuration est sécurisé dans la carte SIM et, au moyen d'une clé stockée sur la carte SIM, donne des ordres spécifiés préalablement pour déclencher des actions dans la station mobile (TN).
